# EUROPÄISCHE PATENTANMELDUNG

(11) **EP 1 967 284 A2**
(43) Veröffentlichungstag der Anmeldung: **10.09.2008**
(21) Anmeldenummer: 08152162.7
(22) Anmeldetag: 29.02.2008
(51) Int. Cl.: B05D 3/06, B05D 3/04

(54) **Verfahren und Vorrichtung zur UV-Strahlungshärtung von Substratbeschichtungen**

(30) Priorität: 06.03.2007 DE 102007012263
(71) Anmelder: IST METZ GMBH, 72622 Nürtingen (DE)
(72) Erfinder: Beying, Armin, 76297 Stutensee (DE); Cremer, Ruben, 72658 Bempflingen (DE); Treichel, Oliver, 70186 Stuttgart (DE); Heering, Wolfgang, 76297 Stutensee (DE); Pieke, Stefan, 76135 Karlsruhe (DE)
(74) Vertreter: Pfiz, Thomas

(57) **Zusammenfassung**

Die Erfindung betrifft ein Verfahren und eine Vorrichtung zur Strahlungshärtung einer Beschichtung eines Substrats (2; 46), wobei die Beschichtung an einem estrahlungsort während einer gegebenenfalls durch eine Relativbewegung des Substrats (2) definierten Bestrahlungsdauer von mindestens einem UV-Strahler (34) mit UV-Licht bestrahlt wird, und wobei von einer Gaszufuhreinrichtung (20, 22, 24, 26, 28) ein Inertgas zugeführt wird, um die negative Einwirkung von Sauerstoff auf die Beschichtung zu reduzieren. Erfindungsgemäß wird vorgeschlagen, dass das Inertgas nur während eines Teils der Bestrahlungsdauer zugeführt wird, und dass während des verbleibenden Teils der Bestrahlungsdauer die Inertgaszufuhr unterbrochen wird.

## Beschreibung

Die Erfindung betrifft ein Verfahren und eine Vorrichtung zur Strahlungshärtung einer Beschichtung eines Substrats mit UV-Licht gemäß dem Oberbegriff der Ansprüche 1 bzw. 19.

Verfahren und Vorrichtungen der eingangs genannten Art werden vor allem zur Härtung von lösemittelfreien Beschichtungssystemen, wie zum Beispiel Farben oder Lacken, auf Substraten eingesetzt, indem man in den Beschichtungssystemen enthaltene Monomere und/oder Oligomere durch die Bestrahlung mit dem UV-Licht vernetzt und infolge der Umwandlung in feste Polymere für eine Härtung der Beschichtung sorgt.

Bei den beschichteten Substraten kann es sich um beschichtete dreidimensionale Objekte handeln, wie zum Beispiel Gehäuseschalen von Mobiltelefonen, Beschläge und andere Dekorelemente von Möbeln oder Einrichtungsgegenständen, Pumpengehäuse und Zierteile von Kraftfahrzeugen, Bestandteile von Lippenstiftgehäusen, Profilstangen oder Rohre, die zur Härtung der Beschichtung durch ein Strahlungsfeld einer mit einem UV-Strahler ausgestatteten UV-Belichtungseinrichtung hindurch bewegt werden, wie beispielsweise in der EP 1 169 611 B1 der Anmelderin offenbart.

Jedoch wird die Strahlungshärtung von Beschichtungen auch zur Behandlung flacher bahn- oder bogenförmiger Substrate eingesetzt, wie zum Beispiel von Bedruckstoffen, die nach ihrem Bedrucken in einer Rollen- oder ogen-Offsetdruckmaschine durch das Strahlungsfeld von einem oder mehreren UV-Strahlern hindurchtransportiert werden, um die in der Druckmaschine auf das Substrat aufgebrachten Druckfarben oder Lacke zu härten.

Die verwendeten UV-Strahler bestehen gewöhnlich aus einer Quecksilber-Nlitteldruckgasentladungslampe, deren Emissionsspektrum durch entsprechende Dotierungen an die chemische Zusammensetzung der jeweiligen Beschichtung angepasst werden kann.

Bei der trahlungshärtung mit UV-Licht handelt es sich um eine Radikalkettenpolymerisation, d.h. eine Reaktion, deren Ablauf durch die Einwirkung von Luftsauerstoff beeinträchtigt wird, da Sauerstoffbiradikale die Kettenbildung unterbrechen, was in unerwünschter Weise zu einer klebrigen oder nur schwach vernetzten Oberflächenschicht führt. Daher ist es bereits bekannt, die Bestrahlung mit UV-Licht in einer sauerstoffreduzierten Atmosphäre vorzunehmen.

Zur Durchführung der UV-Härtung in einer sauerstoffreduzierten Atmosphäre wird in der DE 10 2004 030 674 A1 beispielsweise vorgeschlagen, die zu härtenden dreidimensionalen Substrate durch eine mit einem Inertgas geflutete Bestrahlungskammer zu bewegen. Durch das Ein- und Ausschleusen der Substrate sowie durch den Austausch von in Hohlräumen der Substrate mitgeführter Luft gegen Inertgas treten jedoch nicht unbeträchtliche Inertgasverluste auf.

Weiter ist aus der DE 101 57 554 B4 bereits ein Verfahren und eine Vorrichtung der eingangs genannten Art bekannt, bei denen während einer UV-Bestrahlung von Teilen mit einer beliebigen dreidimensionalen Struktur in einer Bestrahlungskammer ein Inertgas durch eine Gasdüse kontinuierlich in die Bestrahlungskammer eingeleitet und auf die gesamte, dem UV-Licht ausgesetzte beschichtete Oberfläche geblasen wird.

Weiter ist es beim Rollen- oder Bogenoffsetdruck in Druckmaschinen mit mehreren Druckwerken auch bekannt, hinter jedem Druckwerk mit UV-Licht eine Zwischentrocknung bzw. eine Strahlungshärtung der zuvor aufgebrachten Druckfarbe vorzunehmen. Zur Erzielung einer einwandfreien Oberfläche und damit einer hohen Druckqualität ist es jedoch auch dort erforderlich, die Bestrahlung mit dem UV-Licht in einer sauerstoffreduzierten Atmosphäre vorzunehmen. Dazu wird das bedruckte Substrat vor und während der Bestrahlung mit UV-Licht in einer jedem Druckwerk nachgeschalteten Belichtungseinrichtung mit einem Inertgas beaufschlagt, das durch geeignete Düsenanordnungen in die Nähe des Bewegungspfades des Substrats zugeführt wird, so dass es in einer laminaren Strömung an der Oberfläche des Substrats durch das Strahlungsfeld der Belichtungseinrichtung mitgeschleppt wird. Wegen der hohen Transportgeschwindigkeit des Substrats kommt es jedoch in der Nähe der beschichteten Oberfläche zu einer beträchtlichen Verwirbelung des zugeführten Inertgases, was eine Zufuhr relativ großer I-nertgasmengen erforderlich macht, vor allem wenn die Düsenanordnungen in Bogendruckmaschinen wegen überstehender Bogengreifer in einem großen Abstand vom Substrat angeordnet werden müssen.

Ausgehend hiervon liegt der Erfindung die Aufgabe zugrunde, ein Verfahren und eine Vorrichtung der eingangs genannten Art dahingehend zu verbessern, dass die Menge des zur Strahlungshärtung benötigten Inertgases ohne Beeinträchtigung der Qualität oder Oberflächenbeschaffenheit der Beschichtung verringert werden kann.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Überraschenderweise wurde bei Versuchen festgestellt, dass bei einer Strahlungshärtung von Beschichtungen mit UV-Licht die Applikations- oder Einwirkzeit des in die Nähe der Beschichtung zugeführten Inertgases beträchtlich kürzer als die Applikations- oder Einwirkzeit des UV-Lichts selbst sein kann, ohne dass hinsichtlich der Qualität und/oder Gebrauchseigenschaften der gehärteten Beschichtung Unterschiede erkennbar sind.

Dies ermöglichet es, das Inertgas nur während eines Bruchteils der Bestrahlungsdauer am Bestrahlungsort bzw. an der Bestrahlungsstation zuzuführen und die Zufuhr des Inertgases während des übrigen Teils der Bestrahlungsdauer zu unterbrechen, wodurch sich ohne nachteilige Auswirkungen eine beträchtliche Reduzierung der Menge an zugeführtem Inertgas realisieren lässt.

Bei den Versuchen wurde auch festgestellt, dass es hinsichtlich der Qualität und/oder Gebrauchseigenschaften der gehärteten Beschichtung nicht von Bedeutung ist, ob die Zufuhr des Inertgases zu Beginn, in der Mitte oder am Ende der Bestrahlungsdauer erfolgt, solange während eines kleinen Teils der Bestrahlungsdauer Inertgas in die Nähe der Beschichtung zugeführt wird. Notwendig ist lediglich, dass während der UV-Bestrahlung kurzzeitig eine optimale Sauerstoffreduktion an jedem Teil der mit der Beschichtung versehenen Oberfläche gewährleistet ist.

Um sicherzustellen, dass das zugeführte Inertgas stets in die Nähe einer gerade bestrahlten Oberfläche gelangt und dort seine Wirkung entfaltet, sieht eine bevorzugte Ausgestaltung der Erfindung vor, dass das Inertgas direkt bzw. gerichtet auf die mit UV-Licht bestrahlte Beschichtung geblasen wird. Die Inertgaszufuhr wird jedoch vorzugsweise erst nach dem Beginn der Bestrahlung mit dem UV-Licht an einem gegebenen Bestrahlungsort aufgenommen und/oder bereits vor dem Ende der Bestrahlung mit dem UV-Licht wieder unterbrochen, da dies aufgrund der Versuchsergebnisse für die Inertisierung/ Sauerstoffreduzierung völlig ausreichend ist.

Weiter wurde bei den Versuchen festgestellt, dass es von Vorzug ist, das Inertgas mindestens während eines Anteils von mindestens 10 % und vorzugsweise von mindestens 20 % der Bestrahlungsdauer in die Nähe der Beschichtung zuzuführen, um eine Einwirkung auf die Beschichtung sicherzustellen. Zweckmäßig kann die Menge des zugeführten Inertgases und/oder die Dauer der Inertgaszufuhr entsprechend dem Bedarf eingestellt werden, zum Beispiel in Abhängigkeit von der Größe der mit der Beschichtung versehenen Substratoberfläche und/oder der Art der Beschichtung. Insbesondere zur Einstellung der Menge und/oder Dauer der Inertgaszufuhr kann eine gepulste oder intermittierende Zufuhr von Vorteil sein, bei der Inertgasstöße durch Pausen unterbrochen sind. Grundsätzlich kann das Inertgas in Form einer laminaren oder turbulenten Strömung in die Nähe der Beschichtung zugeführt werden.

Von besonderem Vorteil ist es, wenn das Inertgas an einem gegebenen Bestrahlungsort innerhalb eines dort vorhandenen Bestrahlungsaggregats nur für kurze Zeit bzw. nur an der Stelle, an der die Inertisierung bei geringem Gasverbrauch besonders effektiv ist, zugeführt wird.

Auch in diesem Zusammenhang ist es möglich, dass das beschichtete Substrat im Durchlauf durch ein Strahlungsfeld eines ortsfesten UV-Strahlers mit Inertgas beaufschlagt wird, wobei das Inertgas nur in einem Teilbereich des Strahlungsfeldes zugeführt wird.

Um eine möglichst schnelle und gleichförmige Strahlungshärtung von einzelnen beschichteten Substraten, entweder dreidimensionalen Körpern oder zweidimensionalen Bedruckstoffen, zu erzielen, werden diese zweckmäßig nacheinander durch ein Strahlungsfeld von mindestens einem UV-Strahler hindurch bewegt. Dabei wird das Inertgas immer dann an den Bestrahlungsort zugeführt, wenn sich gerade eines der Substrate im Strahlungsfeld befindet, während die Inertgaszufuhr unterbrochen oder abgestellt ist, wenn sich kein Substrat mit einer zu härtenden Beschichtung im Strahlungsfeld befindet.

Sobald ein neues Substrat in das Strahlungsfeld eingetreten und beispielsweise von einem Sensor erfasst worden ist, wird die Zufuhr des Inertgases wieder aufgenommen, die jedoch zweckmäßig bereits vor dem Austritt des Substrats aus dem Strahlungsfeld wieder beendet wird.

Alternativ können die mit der Beschichtung versehenen Substrate nacheinander durch die Strahlungsfelder von zwei oder mehr UV-Strahlern bewegt werden, wobei das Inertgas nur im Strahlungsfeld von einem der UV-Strahler (bevorzugt dem letzten Strahler für die Endhärtung) in die Nähe der Beschichtung zugeführt wird, während im Strahlungsfeld des oder der übrigen UV-Strahler keine Zufuhr von Inertgas erfolgt.

Um das Inertgas in die Nähe der Beschichtung zuzuführen, kann das Substrat durch einen Vorhang aus dem Inertgas hindurchbewegt werden, der sich vorzugsweise innerhalb des Strahlungsfeldes quer zum Bewegungspfad des Substrats bzw. parallel zur Längsrichtung des UV-Strahlers erstreckt. Um zu gewährleisten, dass vor allem die bestrahlte Substratoberfläche mit dem Inertgas beaufschlagt wird, wird dieses zweckmäßig durch mindestens eine Düse zugeführt, die vorzugsweise auf derselben Seite des Substratbewegungspfades wie der UV-Strahler und vorteilhaft außerhalb des Strahlungsfeldes des UV-Strahlers angeordnet ist, um kein UV-Licht abzuschirmen.

Wenn die UV-Bestrahlung beim Offsetdruck zur Härtung verschiedenfarbiger Offsetdruckfarben eingesetzt wird, die in aufeinanderfolgenden Druckwerken einer Offset-Druckmaschine auf die Oberfläche eines bahn- oder bogenförmigen Substrats aufgebracht werden, wobei das Substrat hinter jedem Druckwerk oder ausgewählten Druckwerken mit UV-Licht bestrahlt wird, wird gemäß einer weiteren bevorzugten Ausgestaltung der Erfindung nur hinter dem letzten Druckwerk bei der Strahlungshärtung Inertgas zugeführt, während hinter den übrigen Druckwerken die Bestrahlung ohne eine Zufuhr von Inertgas erfolgt.

Wenn die UV-Bestrahlung beim Offsetdruck zur Härtung verschiedenfarbiger Offsetdruckfarben sowie eines auf die Offsetdruckfarben aufgebrachten transparenten Lacks eingesetzt wird, die in aufeinanderfolgenden Druckwerken bzw. einem nachfolgenden Lackwerk einer Offset-Druckmaschine auf die Oberfläche eines bahn- oder bogenförmigen Substrats aufgebracht werden, wobei das Substrat hinter jedem Druckwerk und dem Lackwerk mit UV-Licht bestrahlt wird, wird gemäß einer weiteren bevorzugten Ausgestaltung der Erfindung nur hinter dem Lackwerk bei der Strahlungshärtung Inertgas zugeführt, während hinter den übrigen Druckwerken die Bestrahlung ohne eine Zufuhr von Inertgas erfolgt.

Die zuletzt genannten Maßnahmen sorgen bei der UV-Bestrahlung hinter den Druckwerken, wo keine Inertgaszufuhr erfolgt, für ein oberflächliches Angelieren der jeweiligen Druckfarbe auf den gedruckten Bildpunkten, während die vollständige Aushärtung der Druckfarbe bzw. des Lacks durch die unter Inertgaszufuhr erfolgende UV-Bestrahlung hinter dem letzten Druckwerk bzw. hinter dem Lackwerk erfolgt.

Außer beim Offsetdruck kann das erfindungsgemäße Verfahren jedoch auch bei allen anderen gängigen Druck- und Lackauftragsverfahren eingesetzt werden, wie zum Beispiel beim Flexodruck, Siebdruck, Tintenstrahldruck sowie auch bei Tauch-, Sprüh- und Vakuumbeschichtungsverfahren.

Eine erfindungsgemäße Vorrichtung zur Strahlungshärtung einer Beschichtung eines Substrats weist mindestens einen UV-Strahler zur Bestrahlung der Beschichtung mit UV-Licht sowie eine Gaszufuhreinrichtung zum Zuführen eines Inertgases in die Nähe der Beschichtung innerhalb des Bestrahlungsfeldes auf und ist dadurch gekennzeichnet, dass die Gaszufuhreinrichtung eine Steuereinheit zur Unterbrechung der Inertgaszufuhr während eines Teils der Dauer der UV-Bestrahlung des Substrats umfasst.

Im Folgenden wird die Erfindung anhand eines in der Zeichnung schematisch dargestellten Ausführungsbeispiels näher erläutert. Es zeigen
- Fig. 1: eine schematische Seitenansicht einer erfindungsgemäßen Vorrichtung zur Strahlungshärtung von beschichteten Substraten;
- Fig. 2: eine perspektivische Rückseitenansicht der Vorrichtung aus Fig. 1;
- Fig. 3: eine perspektivische Rückseitenansicht einer etwas abgewandelten Vorrichtung;
- Fig. 4: ein Schaubild des tiefenaufgelösten Umsetzungsgrades ungesättigter Doppelbindungen in einer mit UV-Licht gehärteten Substratbeschichtung;
- Fig. 5: eine teilweise weggeschnittene schematische Seitenansicht einer ogenoffsetdruckmaschine mit einer erfindungsgemäßen Vorrichtung zur Strahlungshärtung von mit Druckfarbe beschichteten bogenförmigen Substraten.

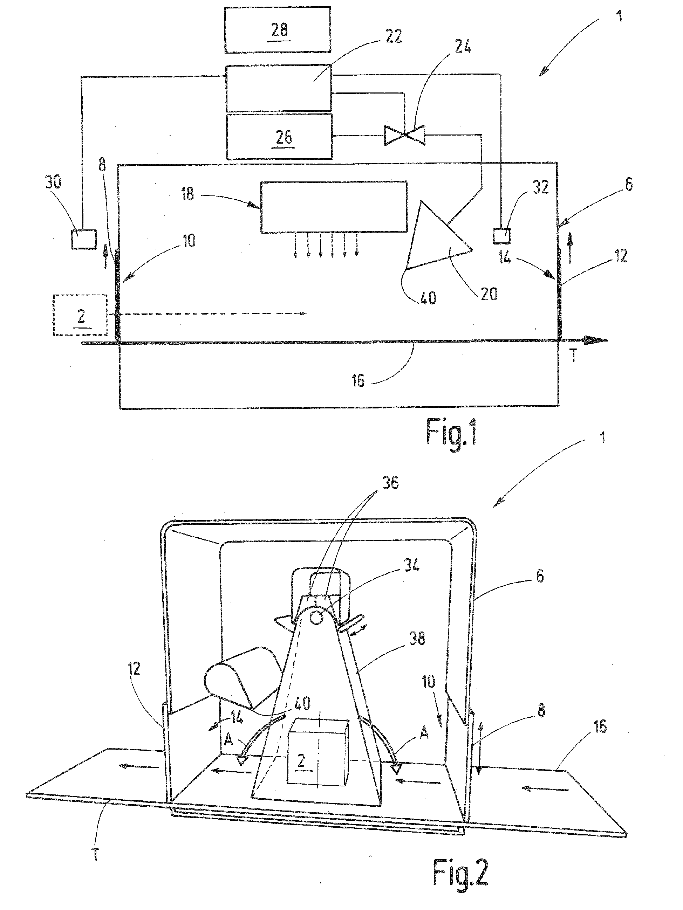

Die in den Figuren 1 bis 3 dargestellten Vorrichtungen 1 dienen zur Strahlungshärtung einer durch Bestrahlung mit UV-Licht härtenden Beschichtung auf dreidimensionalen Objekten 2, wie zum Beispiel Gehäuseschalen von Mobiltelefonen, Beschlägen und anderen Dekorelementen von Möbeln oder Einrichtungsgegenständen oder Zierteilen von Kraftfahrzeugen, die in Fig. 1 und 2 nur schematisch als Rechteck bzw. Würfel dargestellt sind.

Wie am besten in Fig. 1 und 2 dargestellt, umfassen die Vorrichtungen 1 eine Bestrahlungskammer 6 als Bestrahlungsort mit einer durch einen Schieber 8 verschließbaren Eintrittsöffnung 10 und einer durch einen Schieber 12 verschließbaren Austrittsöffnung 14, ein geradlinig durch die Eintrittsöffnung 10, das Innere der Bestrahlungskammer 6 und die Austrittsöffnung 14 verlaufendes Transportmittel 16 zum Transport der beschichteten Objekte 2, ein im Abstand oberhalb des Transportmittels 16 in der Bestrahlungskammer 6 angeordnetes UV-Aggregat 18, eine Stickstoffzufuhrdüse 20, die ebenfalls oberhalb des Transportmittels 16 und in einem geringen Abstand oberhalb der vom Transportmittel 16 transportierten Objekte 2 in der Bestrahlungskammer 6 angeordnet und über ein von einer Ventilsteuerung 22 gesteuertes Ventil 24 mit einer Stickstoffquelle 26 verbindbar ist, sowie eine Prozesssteuereinheit 28 zur Steuerung bzw. Regelung der Bestrahlung der Objekte 2 mit UV-Licht und zur Steuerung bzw. Regelung der Zufuhr von Stickstoff in die Bestrahlungskammer 6.

Die Bestrahlungskammer 6 dient als Lichtschutz für das Bedienungspersonal der Vorrichtungen 1 sowie zur kontinuierlichen Absaugung von eventuell anfallendem Ozon. Die Eintrittsöffnung 10 und die Austrittsöffnung 14 liegen sich an entgegengesetzten Seiten der Bestrahlungskammer 6 gegenüber, erstrecken sich jeweils vom Transportmittel 16 aus nach oben und sind normalerweise durch die Schieber 8 bzw. 12 verschlossen. Bei der Annäherung von einem der Objekte 2 an die Ein- bzw. Austrittsöffnung 10 bzw. 14 werden die Schieber 8 bzw. 12 kurzzeitig ausreichend weit nach oben bewegt, um die Objekte 2 durch die Öffnungen 10, 14 durchzulassen. Die Bewegung der Schieber 8, 12 wird von der Prozesssteuereinheit 28 ansprechend auf die Signale von Sensoren 30, 32 gesteuert, zum Beispiel berührungslosen optischen Sensoren, die jeweils in Transportrichtung T vor der Eintritts- bzw. Austrittsöffnung 10, 14 oberhalb des Transportmittels 16 angeordnet sind und beim Vorbeitritt eines Objekts 2 ein Signal zur Prozesssteuereinheit 28 senden.

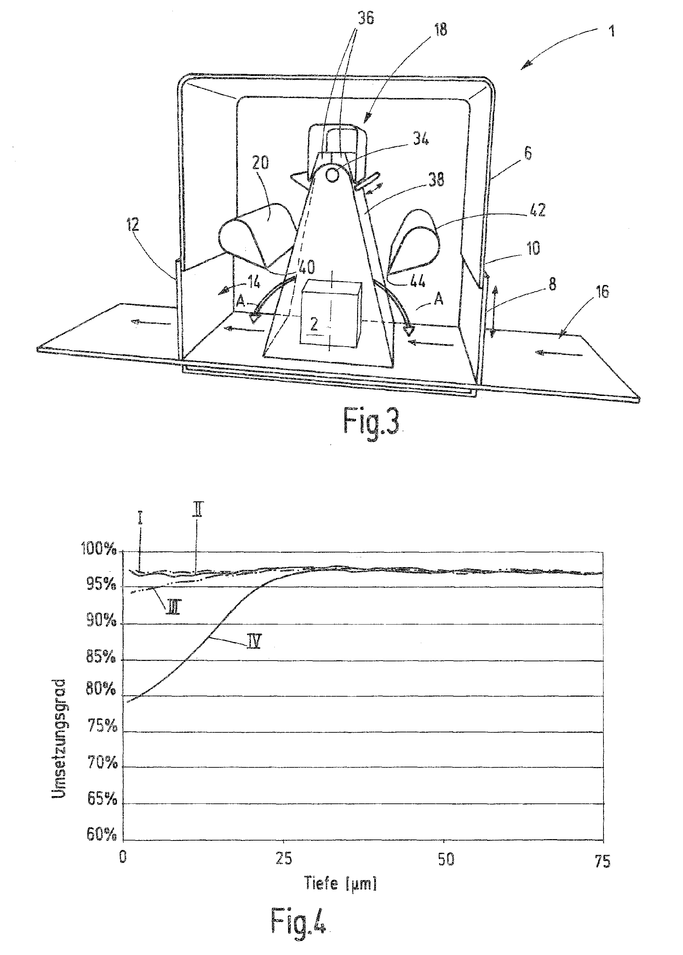

Das UV-Aggregat 18 enthält einen UV-Strahler 34 in Form einer Quecksilber-Mitteldruckgasentladungslampe, die quer zur Transportrichtung T der Objekte 2 ausgerichtet ist, sowie zwei oberhalb des UV-Strahlers 34 angeordnete Reflektoren 36, so dass das vom UV-Strahler emittierte UV-Licht nach unten in Richtung des Transportmittels 16 abgestrahlt wird und die auf dem Transportmittel 16 unter dem UV-Aggregat 18 hindurch bewegten Objekte 2 durch ein pyramidenstumpfförmiges Strahlungsfeld 38 des UV- Strahlers 34 hindurchtreten. Um eine gleichmäßige Bestrahlung der beschichteten Oberflächen der Objekte 2 sicherzustellen, können diese auf ihrem Bewegungsweg durch die Bestrahlungskammer 6 in Bezug zum Transportmittel 16 gedreht werden, wie durch die Pfeile A in Fig. 2 und 3 schematisch dargestellt.

Bei dem UV-Aggregat 18 kann es sich um ein Bestrahlungsgerät handeln, durch das Stickstoff aus der Stickstoffquelle 26 als Kühlgas im Kreislauf geführt wird, ähnlich wie in der EP 1 169 611 B1 beschrieben, auf die zwecks näherer Einzelheiten verwiesen wird. Alternativ kann ein UV-Aggregat 18 mit reiner Luftkühlung verwendet werden, bei dem der UV-Strahler 34 durch eine Quarzscheibe von der Bestrahlungskammer 6 getrennt ist und mit Unterdruck- oder Überdruckkühlung des Strahlers 34 und der Reflektoren 36 arbeitet. Darüber hinaus ist auch die Verwendung eines auf die Bestrahlungskammer 6 aufgesetzten UV-Aggregats 18 ohne Gaskühlung des Lampenraums möglich, wie es beispielsweise aus der DE 10 2005 046 233 A1 bekannt ist.

Die in Fig. 1 und 2 in Bewegungsrichtung der Objekte 2 hinter dem Strahlungsfeld 38 des UV-Aggregats 18 und außerhalb desselben angeordnete Stickstoffzufuhrdüse 20 weist eine quer zur Transportrichtung T ausgerichtete, entgegen der Bewegungsrichtung der Objekte 2 schräg nach unten weisende schmale langgestreckte Gasaustrittsöffnung 40 auf, durch die bei Bedarf Stickstoff aus der Stickstoffquelle 26 in die Bestrahlungskammer 6 zugeführt werden kann. Der aus der Gasaustrittsöffnung 40 austretende Stickstoff bildet oberhalb des Transportmittels 16 eine Art Vorhang, der sich nach unten durch das Strahlungsfeld 38 bis zum Transportmittel 16 erstreckt, so dass es ohne eine vollständige Befüllung der Bestrahlungskammer 6 mit Stickstoff gelingt, die zu härtende Beschichtung der Objekte 2 innerhalb des Strahlungsfeldes 38 kurzzeitig mit dem in die Bestrahlungskammer 6 zugeführten Stickstoff in Kontakt zu bringen. Der Zeitraum, über den eine Einwirkung des Stickstoffs auf die Beschichtung der Objekte 2 erforderlich ist, beträgt nur einen Bruchteil der Bestrahlungsdauer, jedoch wird vorzugsweise eine Einwirkzeit von mindestens 10 % und vorzugsweise etwa 20 % der Bestrahlungsdauer angestrebt.

Um die Menge des in die Bestrahlungskammer 6 zugeführten Stickstoffs weiter zu verringern, wird das Ventil 24 zwischen der Stickstoffquelle 24 und der Stickstoffzuführdüse 20 ansprechend auf ein Signal vom Sensor 30 und in Abhängigkeit von der Transportgeschwindigkeit des Transportmittels 16 so angesteuert, dass nur dann Stickstoff aus der Düse 20 in die Bestrahlungskammer 6 zugeführt wird, wenn eines der Objekte 6 so weit in das Strahlungsfeld 38 eingetreten ist, dass der aus der Düse 20 austretende Stickstoff auf die mit dem UV-Licht bestrahlte beschichtete Oberfläche des Objekts 2 auftrifft und dort die zu härtende Beschichtung kurzzeitig umspült oder anströmt. Außerdem wird das Ventil 24 sofort wieder geschlossen, nachdem das Objekt 2 aus dem Strahlungsfeld 38 ausgetreten bzw. vollständig durch den von der Düse 20 erzeugten Stickstoffvorhang hindurchgetreten ist. Der Zeitpunkt zum Schließen des Ventils 24 kann in Abhängigkeit von der Transportgeschwindigkeit des Transportmittels 16 und dem Zeitpunkt des Ansprechens des Sensors 30 berechnet werden. Alternativ kann jedoch auch ein vom Sensor 32 oder einem zusätzlichen Sensor (nicht dargestellt) stammendes Signal verwendet werden. Die Menge und die Dauer der Stickstoffzufuhr sind durch Veränderung des Öffnungsgrades und der Öffnungsdauer des Ventils 24 in der Ventilsteuereinheit 22 einstellbar, um Objekten 2 mit unterschiedlich großen Oberflächen bzw. Beschichtungen mit unterschiedlicher Zusammensetzung Rechnung zu tragen.

Im Hinblick auf eine weitere Reduzierung der in die Bestrahlungskammer 6 zugeführten Stickstoffmenge kann darüber hinaus eine gepulste Stickstoffzufuhr von Vorteil sein, d. h. ein intermittierendes kurzzeitiges Öffnen und Schließen des Ventils 24 zwischen der Stickstoffquelle 26 und der Düse 20 während der Dauer des Hindurchtritts eines Objekts 2 durch das Strahlungsfeld 38 bzw. durch den aus der Düse 20 auf das Objekt 2 geblasenen Stickstoffstrahl.

Die in Fig. 3 dargestellte Vorrichtung unterscheidet sich von der Vorrichtung in den Figuren 1 und 2 dadurch, dass eine zusätzliche Stickstoffzufuhrdüse 42 vorgesehen ist, die sich wie die Düse 20 außerhalb des Strahlungsfeldes 38 des UV-Aggregats 18 parallel zur Längsachse des UV-Strahlers 34 über den Transportweg der Objekte 2 erstreckt, jedoch in Bewegungsrichtung der Objekte 2 vor dem Strahlungsfeld 38 angeordnet ist und eine schräg nach unten in Bewegungsrichtung der Objekte 2 weisende Austrittsöffnung 44 besitzt. Die beiden Stickstoffzufuhrdüsen 20, 42 können von der Ventilsteuerung 22 bzw. der Prozesssteuereinheit 28 über separate Ventile (in Fig. 3 nicht dargestellt) mit der Stickstoffquelle 26 verbunden werden, so dass entweder beim Eintritt oder beim Austritt eines Objekts 2 aus dem Strahlungsfeld 38 kurzzeitig Stickstoff auf die mit der Beschichtung versehenen Oberflächen des Objekts 2 geblasen werden kann.

Fig. 4 zeigt anhand von vier Kurven I bis IV den tiefenaufgelösten Umsetzungsgrad ungesättigter Doppelbindungen in einer Beschichtung von drei Proben bei einer Bestrahlungszeit von 5 Sekunden Dauer und einer Stickstoffeinwirkzeit von 1 Sekunde Dauer zu Beginn (Kurve I), in der Mitte (Kurve II) und am Ende (Kurve III) der Bestrahlungszeit, sowie bei einer Referenzprobe (Kurve IV) ohne jegliche Zufuhr von Stickstoff während der UV-Bestrahlung. Wie man aus Fig. 4 entnehmen kann, weist die Referenzprobe aufgrund einer Inhibierung durch eindiffundierten Luftsauerstoff bis zu einer Tiefe von etwa 30 □m einen verringerten Umsetzungsgrad auf, während dies bei den drei anderen Proben nicht oder nur sehr geringfügig der Fall ist. Die besten Ergebnisse beim Umsetzungsgrad erhält man, wenn der Stickstoff zu Beginn (Kurve I) oder in der Mitte (Kurve II) der Bestrahlungsdauer kurzzeitig zugeführt wird.

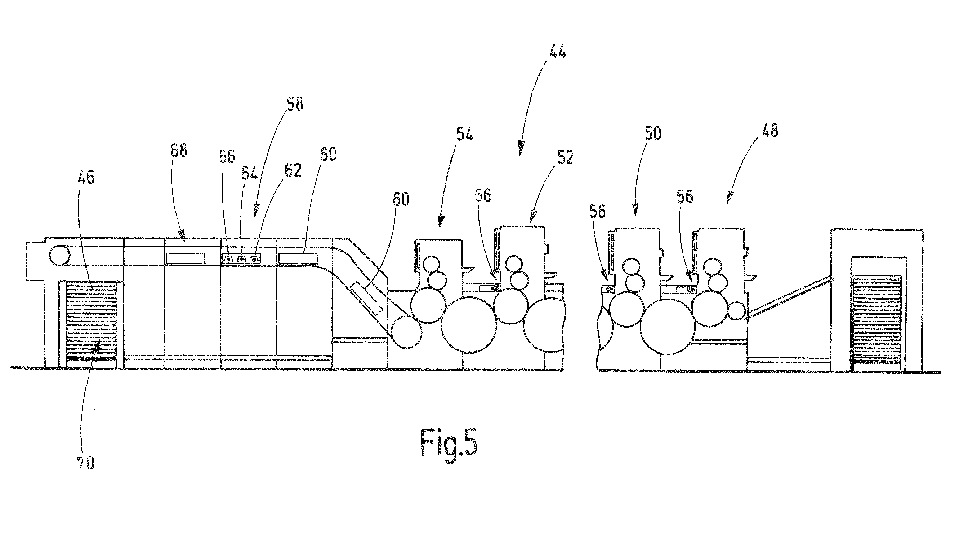

Fig. 5 zeigt eine Bogenoffsetdruckmaschine 44, in der ein bogenförmiger Bedruckstoff 46 als Substrat in einer Mehrzahl von Druckwerken 48, 50, 52 (nur teilweise dargestellt) mit verschiedenfarbigen UV-härtenden Druckfarben bedruckt und in einem nachgeschalteten Lackwerk 54 mit einem transparenten UV-härtenden Lack beschichtet wird. Hinter jedem Druckwerk 48, 50, 52 befindet sich ein UV-Aggregat 56, das einen ähnlichen Aufbau wie das in Fig. 2 und 3 dargestellte UV-Aggregat 18 besitzt und dessen UV-Strahler sich quer zur Transportrichtung der Bogen über deren Transportweg erstreckt. Mit Hilfe der UV-Aggregate 56 kann die kurz zuvor bedruckte Oberfläche der Bogen mit UV-Licht bestrahlt werden, um für eine oberflächliche Angelierung der jeweiligen Druckfarbe auf den gedruckten Bildpunkten zu sorgen. Die Bestrahlung durch die UV-Aggregate 56 erfolgt ohne jegliche Zufuhr von Stickstoff oder eines anderen Inertgases, kann jedoch mit einer geringeren UV-Lichtleistung oder unter Einsatz von geringeren Mengen an Photoinitiatoren in der Druckfarbe vorgenommen werden.

In einer hinter den Druckwerken 48, 50, 52 und dem Lackwerk 54 angeordneten Bogenauslage 58 befinden sich zwei IR-Aggregate 60 mit jeweils mehreren Infrarotstrahlern, die den Lack mit Infrarotlicht bestrahlen, um für einen guten Verlauf des Lacks zu sorgen. Weiter umfasst die Bogenauslage 58 zur vollständigen Aushärtung und Vernetzung der Druckfarbe hinter den IR-Aggregaten 60 drei UV-Aggregate 62, 64, 66, die wie die Aggregate 56 jeweils einen UV-Strahler aufweisen. Im Unterschied zu den Aggregaten 56 ist jedoch vor den drei Aggregaten 62, 64, 66 oder zwischen den Strahlungsfeldern zweier benachbarter Aggregaten zusätzlich eine Stickstoffzufuhrdüse (nicht dargestellt) vorgesehen, die sich über den Transportweg der Bogen erstreckt und schräg nach unten entgegen der Bogenlaufrichtung ausgerichtet ist, so dass der aus der Düse austretende Stickstoff innerhalb des Strahlungsfeldes des nachfolgenden Aggregats in Form eines schmalen, das Strahlungsfeld nicht ausfüllenden Gasstrahls auf die bedruckte Bogenoberfläche geblasen wird. Die Düse kann wie die Düse 20 aus den Figuren 1 bis 3 von einer Steuereinheit intermittierend mit Stickstoff beaufschlagt werden, wobei die Zufuhr stets dann unterbrochen wird, wenn sich eine Lücke zwischen zwei benachbarten Bogen unter der Düse bzw. durch das mit Stickstoff beaufschlagte Strahlungsfeld hindurchbewegt.

Hinter den UV-Aggregaten 62, 64, 66 folgt noch ein Kühlaggregat 68, in dem die bedruckten Oberflächen der Bogen 46 mit Kühlluft beaufschlagt werden, damit sich der am Ende der Auslage 58 angeordnete Bogenstapel 70 nicht zu sehr erwärmt.

## Patentansprüche

1. Verfahren zur Strahlungshärtung einer Beschichtung eines Substrats (2), bei dem die insbesondere als Druckfarben- oder Lackschicht aufgebrachte Beschichtung an einem Bestrahlungsort während einer gegebenenfalls durch eine Relativbewegung des Substrats (2) definierten Bestrahlungsdauer mit UV-Licht bestrahlt wird und bei dem ein Inertgas am Bestrahlungsort zugeführt wird, um die negative Einwirkung von Sauerstoff auf die Beschichtung zu reduzieren, **dadurch gekennzeichnet, dass** das Inertgas nur während eines Teils der Bestrahlungsdauer zugeführt wird, und dass während des verbleibenden Teils der Bestrahlungsdauer die Inertgaszufuhr unterbrochen wird.

2. Verfahren nach Anspruch 1, **dadurch gekennzeichnet, dass** die Inertgaszufuhr erst nach dem Beginn der Bestrahlung mit UV-Licht am Bestrahlungsort aufgenommen und/oder bereits vor dem Ende der Bestrahlung mit UV-Licht am Bestrahlungsort unterbrochen wird.

3. Verfahren nach Anspruch 1 oder 2, **dadurch gekennzeichnet, dass** das Inertgas mindestens während eines Anteils von 10 % und vorzugsweise von etwa 20 % der Bestrahlungsdauer zugeführt wird.

4. Verfahren nach einem der vorangehenden Ansprüche, **dadurch gekennzeichnet, dass** die Menge des zugeführten Inertgases und/oder die Dauer der Inertgaszufuhr entsprechend der Größe der Beschichtungsfläche und/oder der Art der Beschichtung eingestellt wird.

5. Verfahren nach einem der vorangehenden Ansprüche, **dadurch gekennzeichnet, dass** das Inertgas direkt auf die mit UV-Licht bestrahlte Beschichtung geblasen wird.

6. Verfahren nach einem der vorangehenden Ansprüche, **dadurch gekennzeichnet, dass** das Inertgas intermittierend zugeführt wird.

7. Verfahren nach einem der vorangehenden Ansprüche, **dadurch gekennzeichnet, dass** das beschichtete Substrat (2) im Durchlauf durch ein Strahlungsfeld (38) eines ortsfesten UV-Strahlers (34) mit Inertgas beaufschlagt wird, wobei das Inertgas nur in einem Teilbereich des Strahlungsfeldes zugeführt wird.

8. Verfahren nach einem der Ansprüche 1 bis 7, **dadurch gekennzeichnet, dass** das mit der Beschichtung versehene Substrat (2) durch ein gegebenes Strahlungsfeld (38) eines UV-Strahlers (34) bewegt wird, und dass die Zufuhr des Inertgases erst nach dem Eintritt des Substrats (2) in das genannte Strahlungsfeld (38) aufgenommen und/oder bereits vor dem Austritt des Substrats (2) aus dem Strahlungsfeld (38) beendet wird.

9. Verfahren nach einem der Ansprüche 1 bis 8, **dadurch gekennzeichnet, dass** das mit der Beschichtung versehene Substrat (2) nacheinander durch die Strahlungsfelder von mindestens zwei UV-Strahlern (62, 64, 66) bewegt wird, und dass das Inertgas nur im Strahlungsfeld von einem Teil der UV-Strahler, bevorzugt dem letzten Strahler für die Endhärtung, in die Nähe der Beschichtung zugeführt wird.

10. Verfahren nach einem der Ansprüche 1 bis 9, **dadurch gekennzeichnet, dass** das Inertgas in den Bereich eines Bewegungspfades des Substrats (2) zugeführt wird.

11. Verfahren nach einem der Ansprüche 1 bis 10, **dadurch gekennzeichnet, dass** das Substrat (2) durch ein vorzugsweise mittels Düsen gerichtetes Strömungsfeld oder einen Vorhang aus dem Inertgas hindurchbewegt wird.

12. Verfahren nach Anspruch 11, **dadurch gekennzeichnet, dass** das Strömungsfeld oder der Vorhang aus dem Inertgas allgemein quer zum Bewegungspfad des Substrats (2) ausgerichtet wird.

13. Verfahren nach einem der Ansprüche 10 bis 12, **dadurch gekennzeichnet, dass** das Inertgas durch mindestens eine Düse (20, 42) zugeführt wird, die auf derselben Seite des Bewegungspfades wie der UV-Strahler (34) angeordnet ist.

14. Verfahren nach einem der Ansprüche 10 bis 13, **dadurch gekennzeichnet, dass** das Inertgas durch mindestens eine Düse (20, 42) zugeführt wird, die außerhalb des Strahlungsfeldes (38) des UV-Strahlers (34) angeordnet ist.

15. Verfahren nach einem der Ansprüche 10 bis 14, **dadurch gekennzeichnet, dass** das Inertgas in oder entgegen der Bewegungsrichtung des Substrats (2) zugeführt wird

16. Verfahren nach einem der Ansprüche 1 bis 15, **dadurch gekennzeichnet, dass** das Substrat (2) im Inneren einer Bestrahlungskammer (6) durch das Strahlungsfeld (38) bewegt wird, und dass die Zufuhr des Inertgases in die Nähe der Beschichtung erst nach dem Eintritt des Substrats (2) in die Bestrahlungskammer (6) aufgenommen und/oder bereits vor dem Austritt des Substrats (2) aus der Bestrahlungskammer (6) beendet wird.

17. Verfahren nach einem der vorangehenden Ansprüche, **dadurch gekennzeichnet, dass** die Beschichtung verschiedenfarbige Offsetdruckfarben umfasst, die in aufeinanderfolgenden Druckwerken (48, 50, 52) einer Druckmaschine (44) auf die Oberfläche des bahn- oder bogenförmigen Substrats (2) aufgebracht werden, dass die Beschichtung zur Strahlungshärtung hinter jedem Druckwerk (48, 50, 52) mit UV-Licht bestrahlt wird, und dass nur bei der UV-Bestrahlung hinter dem letzten Druckwerk oder bei einer nachfolgenden UV-Bestrahlung zur Strahlungshärtung Inertgas zugeführt wird, während hinter den übrigen Druckwerken (48, 50, 52) die Bestrahlung frei von Inertgas erfolgt.

18. Verfahren nach einem der Ansprüche 1 bis 16, **dadurch gekennzeichnet, dass** die Beschichtung verschiedenfarbige Offsetdruckfarben sowie einen transparenten Lack umfasst, dass die Offsetdruckfarben in aufeinanderfolgenden Druckwerken (48, 50, 52) einer Druckmaschine (44) und der Lack in einem nachfolgenden Lackwerk (54) der Druckmaschine (44) auf die Oberfläche des bahn- oder bogenförmigen Substrats (2) aufgebracht werden, dass die Beschichtung zur Strahlungshärtung hinter jedem Druckwerk (48, 50, 52) und hinter dem Lackwerk (54) mit UV-Licht bestrahlt wird, und dass nur bei der UV-Bestrahlung hinter dem Lackwerk (54) oder bei einer nachfolgenden UV-Bestrahlung zur Strahlungshärtung Inertgas zugeführt wird, während hinter den Druckwerken (48, 50, 52) die Bestrahlung frei von Inertgas erfolgt.

19. Vorrichtung zur Strahlungshärtung einer Beschichtung eines Substrats (2), mit mindestens einem UV-Strahler zur Bestrahlung der Beschichtung mit UV-Licht, sowie mit einer Gaszufuhreinrichtung (20, 22, 24, 26, 28) zum Zuführen eines Inertgases in die Nähe der Beschichtung innerhalb des Bestrahlungsfeldes des UV-Strahlers, **dadurch gekennzeichnet, dass** die Gaszufuhreinrichtung (20, 22, 24, 26, 28) eine Steuereinheit (22, 28) zur Unterbrechung der Inertgaszufuhr während eines Teils der Dauer der UV-Bestrahlung des Substrats (2) umfasst.
